(19)

Europäisches
Patentamt
European
Patent Office
Office européen
des brevets

(11) **EP 1 443 687 B1**

(12) **EUROPEAN PATENT SPECIFICATION**

(45) Date of publication and mention
of the grant of the patent:
**09.04.2008  Bulletin 2008/15**

(51) Int Cl.:
**H04B 10/13** *(2006.01)*

(21) Application number: **03425041.5**

(22) Date of filing: **29.01.2003**

(54) **Improved VCSEL analog optical link**

Verbesserte VCSEL analoge optische Verbindung

Liaison optique analogique VCSEL améliorée

(84) Designated Contracting States:
**AT BE BG CH CY CZ DE DK EE ES FI FR GB GR
HU IE IT LI LU MC NL PT SE SI SK TR**

(43) Date of publication of application:
**04.08.2004  Bulletin 2004/32**

(73) Proprietor: **Siemens S.p.A.**
**20126 Milano (IT)**

(72) Inventors:
• **Buoli, Carlo**
**20060 Bussero (IT)**
• **Esposito, Claudio**
**20151 Milano (IT)**
• **Mora, Giovanni**
**24056 Fontanella (BG) (IT)**

(56) References cited:
• **INGHAM J D ET AL: "1.25-Gb sbidirectional
multimode fibre data link using a dual-purpose
vertical-cavity laser & detector" CONFERENCE
PROCEEDINGS ARTICLE, vol. 3, 30 September
2001 (2001-09-30), pages 462-463, XP010583471**
• **WOODWARD T K ET AL: "1-GB/S BPSK
TRANSMISSION AT 850 NM OVER 1 KM OF 62.5-
MUM-CORE MULTIMODE FIBER USINGA A
SINGLE 2.5-GHZ SUBCARRIER" IEEE
PHOTONICS TECHNOLOGY LETTERS, IEEE INC.
NEW YORK, US, vol. 11, no. 3, March 1999
(1999-03), pages 382-384, XP000823484 ISSN:
1041-1135**

EP 1 443 687 B1

**Description**

**FIELD OF THE INVENTION**

The present invention relates to the field of multimode analog optical fibre communications and more precisely to an improved VCSEL analog optical link.

**BACKGROUND ART**

Historically, Light Emitting Diodes (LED) have represented the most popular light emitting devices in data transmission through optical fibres, nowadays solid state lasers are replacing LEDs in almost all optical fibre communications. Different materials can be mixed to the silica during the manufacturing process of the optical fibres in order to obtain particular wavelength windows of minimum propagation losses for the light. Well exploited windows are: the first (around 850 nm), the second (around 1,300 nm), and the third (around 1,550 nm). All these optical windows belong to the infrared spectral range. Lasers are designed for emitting a coherent light inside said optical windows. Optical fibres can be single-mode or multimode, the single-mode have lower core/cladding ratios, typically 9-10/125 $\mu$m against 50-65/125 $\mu$m of the multimode. Single-mode fibres are more expensive than multimode and have the advantage to exhibit small attenuation of the light and minor intermodal dispersion, so that they are preferred for the longer distances. Solid state lasers have intrinsic non-linearities because of the coupling between the carrier density and the photon density through the material. These non-linearities generate spurious Intermodulation Distortion (IMD) that can fall within the detection bandwidth, such as the third order (IMD3) ones. A measure that quantifies the effect of the non-linearity of the laser is the Spurious Free Dynamic Range (SFDR), defined as the output power range over which the modulation signal can be detected above the noise floor while spurious IMD3 remains below the noise floor. The SFDR value is measured with standard two tone method and conventionally normalised into 1 Hz bandwidth. The SFDR unit are dB.Hz$^{2/3}$ because multiplying X times the bandwidth, the worsening of SFDR is just 2/3 * X(dB). The attention will be focussed on Vertical Cavity Surface Emitting Laser (VCSEL), which is the last developed after Fabry-Perot (FP) and Distributed Feedback (DFB). Typical SFDR range of the DFB lasers is 90-110 dB.Hz$^{2/3}$. Both FP and VCSEL lasers have lower SFDRs than DFB, this is mainly due to the multimode behaviour. Before discussing the prior art a brief introduction to the most popular solid state laser technologies and some relevant applications are given in order to introduce the technical problem.

FP lasers are edge-emitting devices; that is the emitted light pencil comes out parallel to the substrate at one side of an active resonating cavity placed in the middle of a wafer structure. Top and bottom layers of the wafer consist of two slabs of semiconductor material specially designed to behave as two faced mirrors reflecting the light back and forth the solid state cavity. Electric current flows through the device from the top slab to the bottom for stimulating the emission of light inside the active layer. The emitted light is spatially and temporally coherent but not entirely monochromatic because more wavelengths are emitted inside a narrow window around a central wavelength. This characteristic of the emitted light is said "multimode". FP lasers at the second optical window coupled to either monomode or multimode optical fibres are commonly used in digital communications such as Local Area Networks (LAN). The FP lasers have some limitations because of their multimode characteristic, in particular:

- due to the coupling between multimode emitted light and dispersive optical fibres, the shape of the transmitted signal is distorted as it travels along the fibre; in consequence of that the maximal length of the fibre haul shall be reduced in comparison with monomode;
- Wavelength Division Multiplexing (WDM) inside the single optical fibre is prevented because an extremely chromatic purity of the light is needed. Multimode fibres suitable for WDM are doped for obtaining adjacent optical windows of minimum losses.

1. The opportunity of using FP lasers for transmitting analog band-pass optical signals is disclosed in the article: "Dynamic Range Requirements for Microcellular Personal Communication Systems Using Analog Fiber-Optic Links", authors: J.C. Fan, C.L. Lu, and L.G. Kazovsky, published in IEEE TRANSACTIONS ON MICROWAVE THEORY AND TECHNIQUES, VOL. 45, NO. 8, AUGUST 1997. The object of this IEEE article is that to study the quality requirements of the laser to be used in a centralised optical fibre infrastructure for a wireless Personal Communication System (PCS). PCS is a modern cellular telephony system characterised by cells of reduced dimensions, i.e.: 100-500 m radius, as indicated by WACS/PACS Bellcore Standard TR-INS-001313,1994. For this aim a comprehensive wireless/optical model is provided to perform computer simulations. The hypothetical simulated scenario foresees a centralised Base Station optically connected to many remote antennas serving as many microcells. Analog signals in the PCS band around 2 GHz (Rx 1850-1910 MHz ; Tx 1930-1990 MHz) cross the fibres. The only uplink connection has been studied because this connection is the more penalised one (BTS antenna collects a larger interference than the mobile). Channel band of 270 kHz and QPSK modulation are assumed. The uplink channel includes an AGC which keeps the modulation depth of the laser constantly near to the optimum. Fast Power Control able to counterfeit the Rayleigh fading and the log-normal attenuation is introduced in the model. Typical penalty of the wireless system, such as: Rayleigh fading, cochannel interferences, adjacent channel interferences, etc., together with laser penalty, such as noise and intermodulation are considered. A mathematical expression (5) including laser IMD3 product (coefficient $b_3$) has been developed for calculating the whole PCS+Laser SIR (Signal to Interference Ratio). Coefficient $b_3$ is separately resolved by SFDR and the result introduced in the original expression (5) in order to evaluate the impact of the SFDR on the whole SIR. Plotting are given on the PCS availability as function of the SFDR parameter of the laser. The conclusion is that (due to the statistical uncertainty of the wireless losses and interferences) an SFDR value in the range 72-83 dB. $Hz^{2/3}$ is acceptable and either single-mode DFB or multimode FP semiconductor lasers can be used. Nothing is said about the use of VCSELs. Besides, given the theoretical nature of the article, the suitability of FP lasers is taken from a paper titled: "Interrelationship of wireless services with optical networks", presented by K. Emura at the LEOS'95 Conf., Sanf Francisco, CA, October 1995.

DFBs are monomode edge-emitting lasers having higher wavelength resolution than the previous FPs, so as to overcome the underlined multimode limitations. A DFB laser is substantially obtained from the FP structure by inserting a grating layer into the active resonant cavity. The grating layer acts on the light reflection in a way that the final effect is the selection of a single wavelength into the active cavity, this means that the emitted light is monomode. Due to their inherent manufacturing complexity DFB lasers are much more expensive than FPs, even of 1000 times, but the increased costs could be absorbed by the suitability to be employed with larger WDM spectral allocation. DFB lasers emitting in third optical window coupled to single-mode optical fibres are used in long-haul optical rings.

Thomson-CSF and Miteq have jointly developed a monomode DFB Analogue Microwave Optical link. High speed photodiode and the E-2000™ optical connector system from Diamond is used in the link. The relative brochure is titled: "MDD Microwave optical link". Many applications are foreseen, i.e.: remoting, timing and reference signal distribution, telemetry, measurement, etc. Various possible modulations are depending on the particular applications. 12 GHz bandwidth and low noise are available for analogue applications. The proposed optical link is very expensive, due to the high cost of the DFB laser and strict mechanical tolerances of the Diamond connector, so that massive applications are discouraged. Besides the manufacturing costs, also the installation costs have to be considered; in fact the operator shall perform in-site difficult heading and checks.

Differently from the preceding lasers FP and DFB, multimode VCSEL lasers are vertical-emitting devices because the light pencil is emitted perpendicularly to the substrate through the semitransparent top slab electrode of the wafer structure. Top and bottom electrodes which delimit the active resonant cavity are DBR (Distributed Bragg Reflector) structures made of a stack of alternate mirrors. The light pencil is narrower and more circular than the preceding FPs and DFBs and the coupling to the optical fibres is made easier consequently. VCSEL lasers are about a third less expensive than FPs because, thanks to the emission through the substrate, they can be tested directly on the manufacturing substrate before cutting. Multimode VCSEL devices emit preferentially inside the first optical window (850 nm). Being the embodiment of the invention in subject based on VCSEL, the advantages of this technology are listed in the following:

- Circular symmetric far field with a small angle of divergence, so that the emitted beam can be injected very simply and efficiently into optical fibres.
- Potentially low cost, because the technologies used for VCSEL are the same as those used for the fabrication of integrated electronic circuits.
- Low threshold currents and efficiencies of over 50%.
- No light reflected back towards the laser re-enters the resonator, thanks to the DBR (Distributed Bragg Reflector) output coupler. As a consequence, they show a typical value of Relative Intensity Noise (RIN) of -125 dB/Hz, which is lower than the typical edge-emitter values.
- MTBF (Mean Time Before Failure) exceeds ten million hours at room temperature and moderate currents.

The primary area of application of low power VCSELs is short-haul gigabit Ethernet in baseband digital communication through multimode fibres. In this area they cover near 95% of the applications. The low cost and low power supply requirements of VCSELs make them attractive candidates for those applications, such as antenna remoting, that require many optical links. VCSELs digital optical links are currently used for antenna remoting, the Applicant SIEMENS is active in this field. The primary aim of antenna remoting is the reduction of RF transmission power losses due to the length of the coaxial cable connecting the indoor transmitter to the tower antenna. Thanks to the digital optical link, the baseband processors are kept at the base of the tower, while the remaining transmitting and receiving parts are placed directly on the rear of the antenna. The same digital implementation is used in complex smart antenna systems which foresee a certain number of SWR (Software Radio) chains (typically 4 or 8) each connected to a respective antenna element of a directive array.

The suitability of VCSEL analog optical links for antenna remoting (limited to the PCS system) is discussed in the article titled: "Multimode VCSEL links for RF Communication", authors: Harry Lee and Rajeev J. Ram, Sponsor U.S. Navy - Office of Naval Research; published in RLE Progress Report Number 141, pag.160-161. Thanks to the analog optical link the outdoor apparatuses can be further simplified. In particular, the following elements are shiftable indoor: both D/A and Up frequency converter for downlink; for uplink both A/D and Down frequency converter. In the Harry Lee's article two Figures are given for representing contours of constant SFDR values measured at the end of two optical links 27 m and 150 m long, as function of both bias current and frequency. The shortest link shows an SFDR peak of 96 $dB.Hz^{2/3}$ (1 Hz BW) nearly constant inside a band of 200-300 MHz centred around 3.8 GHz, for optimum bias current of 20 mA. The longer 150 m link shows a maximum SFDR of 91 $dB.Hz^{2/3}$ nearly constant inside a band of 100-200 MHz centred around 2 GHz, for a bias current greater than 20 mA.

The article Ingham J.D. et al. with title "1-25 Gb s-1 bidirectional multimode-fibre data link using a dual-purpose vertical-cavity laser & detector", published in Amsterdam the 30th September 2001; pages 462-463 also discloses an experimental setup of a multimode fibre data link including VCSEL and photodetector and opto-electronic interface to couple to the multimode fibre.

## APPROACH TO THE TECHNICAL PROBLEM

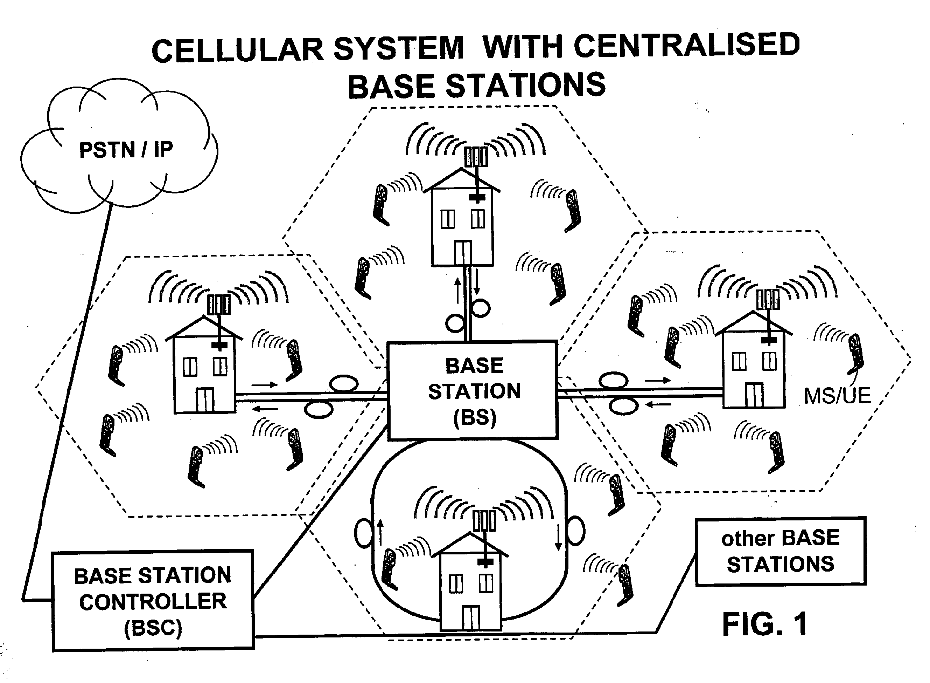

A sound technical problem concerning VCSEL analog optical links is that to extend the antenna remoting to the most popular cellular systems spanning wider distances than the ones typical of PCS. To this aim the SFDR parameter of the whole link must be investigated. A partial teaching in this direction is given in the cited article of Harry Lee and Rajeev J. Ram. The highest SFDR value of 91 $dB.Hz^{2/3}$ measured with 150 m link against the needed PCS range of 72-83 $dB.Hz^{2/3}$ makes it suitable for PCS. Nevertheless this suitability to build up the PCS's fibre infrastructure should be verified at the maximal length. The shortest maximal length of a PCS optical fibre connection is at least 500 m and occurs in correspondence of a centralised base station (as shown in fig.1). By a simple extrapolation of the difference [SFDR $_{27\ m}$ - SFDR $_{150\ m}$] measured by Harry Lee to the difference [SFDR $_{150\ m}$ - SFDR $_{500\ m}$], the final SFDR value of the analog VCSEL optical link should be reduced to 71.6 $dB.Hz^{2/3}$ (which is lightly under the minimum PCS value of 72 $dB.Hz^{2/3}$).

Longer optical links than PCS are needed to implement a central fibre infrastructure inside GSM or UMTS clusters. Urban cells with radius greater than 1 km are usual in GSM and the same should be for UMTS. Rural cells, as a rule, have greater radius than urban cells. Simulations to set suitable SFDR ranges for GSM and UMTS are presently unknown, nonetheless SFDR values of 72-83 $dB.Hz^{2/3}$ are largely inadequate in Software Radio applications where programmable wideband transceivers with high linearity are needed. Unfortunately, when attempting to increase the length of the analog VCSEL optical link its SFDR is reduced much more than monomode, also the channel bandwidth is reduced. The given explanation is that for longer multimode links the modal dispersion dominates the link performance and the dynamic range follows the frequency response of the optical fibre, which depends on how the mode groups are excited in the fibre, which in its turn depends on the bias current of the VCSEL setting the gain suitable for a given fibre length. This complex dependence introduces large SFDR variations with the length of the fibre and also sharp nulls for certain frequencies, as shown by the comparison of the two Figures reported in the article of Harry Lee et al., were the great variation on the shapes of constant SFDR contours passing from 27 to 150 m link is put in foreground. The complicated law which the SFDR parameter obeys to, makes difficult to match the required quality of the VCSEL analog optical link when the fibre lengths are involved in the practical cases such as: PCS, GSM, and UMTS. This drawback strongly limiting the useful length of the VCSEL analog links. In any case the maximum measured SFDR of 96 dB relevant to 27 m optical link is slightly under the limit of 97 dB required for Cable Television (CATV).

Known analog multimode optical links shall include a minimum number of elements indispensable for the optical transmission, i.e.: a RF preamplifier as far as possible linear, the laser diode, a matching network between the two, a multimode optical fibre, a PIN diode followed by a RF amplifier and another matching network between the two. The known designs for the optical receiver, which includes the PIN diode and the RF amplifier, are substantially two: the first is called *high impedance* or *integrating front end,* the second is called *transimpedance amplifier.* The *high impedance* approach provides the means for achieving minimum circuit noise. However this approach usually results in reduced dynamic range and the possible requirements of individually equalised amplifier. The *transimpedance amplifier* approach is finding widespread use because it: a) is capable of wide bandwidths, b) provides greater dynamic range, and c) has noise performance which can approach that of the first approach. Detailed discussions of these two approaches are found in the literature.

As far as concerns VCSELs, many Honeywell Application Sheets give exhaustive explanations on the intrinsic noise and distortions. A relevant parameter of VCSEL is the electro-optical conversion gain function P(I), where P is the emitted light power and I is the forward excitation current through the VCSEL. This function is quite linear above a threshold current $I_{TH}$. The slope efficiency $\eta = \Delta P/\Delta I$ is strong dependent on the temperature. Obviously the linear trend of the slope cannot be maintained indefinitely and saturation happens sooner or later, in such a case distortions like Amplitude Modulation to Amplitude Modulation conversion (AM/AM) occurs. Variations on the bias current of VCSEL affect the intrinsic intermodal dispersion inside the optical fibre (see Harry Lee et al.) deviating the channel characteristics from the ideal. In this case AM/PM distortion occurs. Deviations from the ideal also occur on the detected signal by effect of the gain compression of the various RF amplifiers at the highest power levels. In such a case both AM/AM and Amplitude Modulation to Phase Modulation conversion (AM/PM) are possible. Those distortions are particular relevant in case a final RF power amplifier is used downstream the optical receiver to feed a transmitting antenna. In this case the AM/PM distortion of the final RF power amplifier gives an additional contribution to the AM/PM distortion due to the intermodal dispersion inside the optical fibre. Whether said deviations from the linearity are not adequately counteracted, the signal at the end of the optical link is no more a faithful copy of the input and the overall quality of the link is worsen. Moreover noise negatively affects the fidelity of the optical link and shall be kept as low as possible. The high SFDR values requested by some actual standards force the designers to minimise the tolerated noise; that is a sound design should have care of reducing distortions together with noise. Another parameter to be considered in a sound design is the possible peak-to-average power ratio of the input signal, because on the high peaks all the active devices might be saturated and introduce distortions, consequently. It may happen that upon the peaks the input preamplifier is not more linear, so as the VCSEL and the RF power amplifier, and the losses of the optical fibre increase due to a side change of the intermodal dispersion. Some countermeasures are known to prevent these side effects, i.e.: the impedance matching between VCSEL and its driving amplifier; the impedance matching between the PIN diode and its downstream amplifier; the closed-loop control of the VCSEL bias current; the gain and phase linearisation of the RF final power amplifier.

## OBJECTS OF THE INVENTION

The object of the present invention is that to overcome the drawbacks of the prior art and to indicate an analogue VCSEL optical link showing acceptable SFDR values compatible with the services involved as the length of the fibre increases.

A first preferably length being at least 150 m to match up to typical lengths of the intra-building connections involved in CATV service. This length also exceeds the typical lengths suitable to connect indoor apparatuses with tower antenna, in particular an antenna of a line-of-sight radio relay, either of the point-to-point or point-to-multipoint type, or an array of antennas suitable for beamforming.

A second preferably length being at least 500 m to match up to a small-size fibre infrastructure suitable for connecting a centralised base station of a pico/microcellular system to a pool of remote antennas serving as many cells.

A third preferably length being at least 1.6 km to match up to a fibre infrastructure suitable for connecting a centralised base station of a second or third generation cellular telephone system (GSM or UMTS) to a pool of remote antennas serving as many urban/rural cells.

Any other lengths greater than 1.6 km are preferred to match up to wider cells on condition that the quality of the optical link is maintained. A channel bandwidth of 5 MHz is desirable with all the above lengths in order to accommodate at least one UMTS channel (WCDMA, UTRAN-TDD-HCR). A channel bandwidth of 6 MHz is desirable to accommodate at least one CATV channel (as per the U.S. TV Frequency Standards) and 8 MHz in the European countries.

## SUMMARY AND ADVANTAGES OF THE INVENTION

To achieve said objects, an analog VCSEL optical link is disclosed in the main claim of the present application, relatively to a minimal configuration including the following elements: a first RF amplifier receiving an analog RF signal and generating a current thereof to drive a VCSEL laser coupled to a multimode optical fibre of a given length; a first matching network between the VCSEL and the first RF amplifier; a PIN diode followed by a second RF amplifier and a second matching network between the two; an RF signal envelope detector generating a control signal for a variable phase shifter placed downstream the second RF amplifier to compensate for the AM/PM distortion introduced by the optical fibre. In order to further characterise the foregoing combination: the first RF amplifier is a linear preamplifier; the first impedance matching network is of the wideband type; the second RF amplifier is a low-noise (FET) transimpedance amplifier; and the second impedance matching network is designed to minimise the noise figure of the transimpedance amplifier.

The compensation of the optical dispersion driven by the amplitude envelope is surprising indeed for the following reasons: a) the intermodal dispersion is an unintentional optical effect, and b) the complex relation existing between the amplitude envelope and the AM/PM distortion inside an optical fibre is yet not completely cleared up. Furthermore, the PIN diode and the transimpedance amplifier with the interposed circuitry, is a new approach in designing optical receiver having the advantage of minimum noise of the *high impedance* approach together with greater dynamic range and wide bandwidth of the *transimpedance amplifier* approach.

The minimum configuration of the optical link is characterised by low amplifications, nonetheless performances obtained with short links are comparable to the performances of optical links based on very expensive lasers and monomode optical fibres. As an immediate consequence, the proposed analog VCSEL optical link is the cheapest solution for intra-building connections in CATV applications. Besides, it allows significant cost saving in those base stations where large optical link deployment is needed, such as the ones using smart antennas for reception beamforming.

A first alternative embodiment of the invention includes a third RF amplifier placed immediately before the variable phase shifter. The two RF amplifiers placed in tandem downstream the PIN diode provide additional amplification to allow further applications of the invention, such as to build-up a fibre infrastructure between a centralised Base Station of a cellular telephone system and a pool of remote antennas used for downlink transmissions. In this case the third RF amplifier is a final power amplifier connected to a transmitting antenna, and the variable phase shifter also compensates for the AM/PM distortion introduced by the RF power amplifier on the power peaks.

A second alternative embodiment of the invention, depending on the first one, includes a gain linearisation network designed to compensate for the AM/AM distortion of the final RF power amplifier on the power peaks of RF modulated signals characterised by high peak-to-average power ratios.

A third alternative embodiment of the invention, independent of the preceding two, includes a gain linearisation network designed to compensate for the AM/AM distortion of the first RF power amplifier due to the following combination: a) the high amplification which is needed to drive the VCSEL adequately for the longest optical links; b) the presence of RF modulated signals characterised by high peak-to-average power ratios.

The combined teaching of the invention and its alternatives allows to improve noticeably the SFDR of the analog VCSEL optical links, making possible to prolong their length well beyond the indicated distance of 150 m, consequently. Furthermore, a great variety of RF analog signals can be transmitted/received through the link of the invention, for example, spacing from a pure sinusoid to modulated signals having a bandpass spectrum up to 100 MHz bandwidth, freely allocable into a wide frequency range spanning from about 200 MHz up to the highest microwave frequencies of VCSEL (few GHz). There are not limitations on the type of modulations, i.e.: AM, FM, PM, GMSK, CPM, N-PSK, N-QAM, etc. Single carrier or multicarrier modulated signals are transmissible through the said optical link arranged for point-to-point or point-to-multipoint communications. It can be appreciated that in case of multicarrier transmissions with variable number of carriers and/or high-index QAM modulations, the present invention is able to operate in presence of great peak-to-average power ratios.

Because of good performances are held when the fibre length increases other than 1 kilometre, a preferred embodiment of the invention surely includes the first alternative embodiment, but most advantageously might include either the second or the third alternative embodiment, or both, without limitation to the type of cellular system of the second (GSM) or third generation (UMTS).

**BRIEF DESCRIPTION OF THE DRAWINGS**

The features of the present invention which are considered to be novel are set forth with particularity in the appended claims. The invention, together with further objects and advantages thereof, may be understood with reference to the following detailed description of an embodiment thereof taken in conjunction with the accompanying drawings given for purely non-limiting explanatory purposes and wherein:

- **fig.1** shows a cellular system architecture based on a centralised base station connected by means of couples of optical fibres (one fibre for each direction of transmission) to as many remote antennas located inside respective cells/microcells; the optical links including the teaching of the present invention;
- **fig.2** shows a CATV system whose intra-building optical links include the teaching of the present invention.
- **fig.3** shows the transmitter and receiver parts at the two sides of a couple of optical fibres of fig.1;
- **fig.4** shows the transmitter and receiver parts of the preceding Figure implemented in accordance with the present invention;
- **fig.5** shows a generic Device Under Test (DUT) tested for its 3rd order Intermodulation Distortion (IMD3);
- **Figures 6** and **7** schematise IMD3 distortion and IP3 concept, respectively;
- **fig.8** shows the DUT of fig.5 including a VCSEL optical link of the known art;
- **Figures 9a** and **9b** show two plots of the gain vs. frequency measured for the DUT optical link of fig.8, with 500 m and 1.6 k m fibre lengths, respectively;
- **Figures 10** and **11** show circuital details of two networks LASINT and PHOTINT belonging to the optical links of fig.4;
- **Figures 12a** and **12b** show a plot of the gain vs. frequency relevant to the DUT of fig.8 upgraded with the two networks LASINT and PHOTINT of fig.10 and fig.11 with 500 m fibre length;
- **Figures 13a** and **13b** are similar to Figures 12a and 12b with 1.6 k m fibre length;
- **fig.14** shows circuital detail of a matching network PHC internal to optical links of fig.4;
- **Figures 15a** and **15b** show a CDMA output spectrum and the corresponding ACPR interference relevant to the DUT of fig.8 upgraded with the three networks LASINT, PHOTINT and PHC of Figures 10, 11 and 14, for 500 m fibre length; and

- **Figures 16a** and **16b** are equivalent to Figures 15a and 15b with 1.6 k m fibre length.

## DETAILED DESCRIPTION OF AN EMBODIMENT OF THE INVENTION

With reference to **fig.1** a Base Station BS is visible at the centre of a cluster including cells and/or microcells belonging to a cellular telephone system. A remote antenna is installed on a build placed at the centre of each cell of the cluster. Remote antennas and the centralised base station are connected to each other by means of couples of multimode optical fibres, one fibre for each direction of transmission in case of FDD duplexing (only 1 fibre for TDD half-duplex). Conventionally, the transmission from the base station BS to a remote antenna is said downlink (or direct link), while the opposite direction is said uplink (or reverse link). More hand-held mobile phones, either Mobile Station MS or User Equipment UE, are connected via-radio with the respective remote antenna of the serving cell. The centralised base station is connected to a Base Station Controller (BSC), the latter is connected to other base stations, to a Public Switch Telephony Network (PSTN), and to an Internet Network IP. The depicted cluster might belong to any of the most popular cellular systems, for example: GSM-GPRS 880-960 MHz; DCS-GPRS 1710-1880 MHz; PCS 1850-1910 MHz; and the following UMTS standards located in the proximity of 2 GHz: UTRA-FDD 3.84 Mcps; UTRA-TDD-HCR 3.84 Mcps; UTRA-TDD-LCR: 1.28 Mcps; TD-SCDMA 1.28 Mcps; etc.). Considering a Root Raised Cosine (RRC) filter response with a roll-off $\alpha$=0.22 and a bandwidth equal to the chip rate, it results a channel spacing of 5 MHz for 3.84 Mcps chip rate, and 1.6 MHz for 1.28 Mcps. Depending on the system represented in fig.1, cells from 100 m up to 1.6 km radius, and more, are possible. Each singular optical fibre of the infrastructure represented in fig.1 is crossed by an optical signal which optically reproduces an analog radiofrequency signal either to be transmitted by, or received at, the relevant antenna. Type of modulation, code, and burst format of the optical signal are the ones as specified at the on-air interface of the represented system; for example: the GSM Um interface, the UMTS Uu interface., etc. The interface between base station BS and base station controller BSC is the one as specified by the relevant standard. The base station controller BSC is connected to the PSTN and IP networks through the A interface. The configuration with the base station BS at the centre of the cluster is the one having the highest symmetry and the minimum length of the maximal fibre haul. It can be appreciate that the centralised architecture save a lot of base stations together with the respective tower antennas. The fibre infrastructure allows each subscriber station MS/UE to communicate with the centralised base station BS either in originating or terminating calls. Base station controller BSC routes calls originated inside a cluster relevant to a centralised base station BS either towards other centralised base stations BS or the PSTN / IP network, and towards the relevant base station BS calls to be terminated inside the relative cluster.

A variant of the cluster of fig.1 (not shown for simplicity) is referred to a smart antenna system including a fibre infrastructure similar to the one visible in fig.1, except for one or more cells including an M-elements antenna array each connected to the base station BS by means of 2M analog RF optical links, in case of FDD duplexing. As known, an antenna array together with the connected optical receivers and transmitters allow to perform beamforming, either 360° or tri-sectorial, for the aim of interference reduction and spectral efficiency increasing.

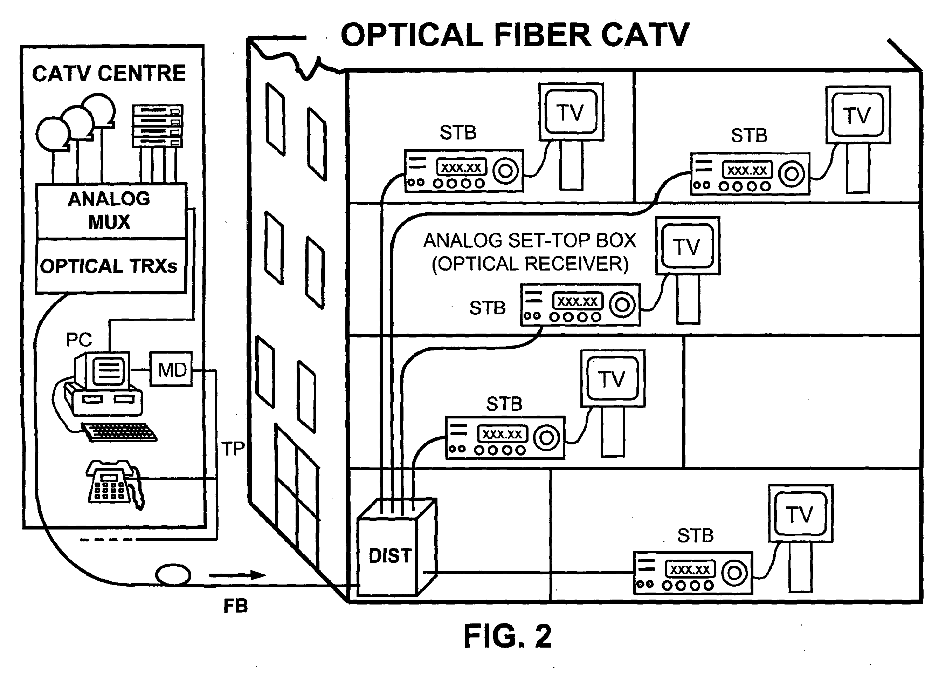

**Fig.2** shows a CATV system using optical fibres for intra-building and extra-building connections. With reference to the Figure, a CATV centre includes a ANALOG MUX (video server) which connects an analog film archive (tapes or cassettes) to a plurality of optical transmitters TRXs. Analog signals at the outputs of TRX transmitters are conveyed on an analog optical cable FB directed towards a building in the neighbouring. A computer PC is connected to the video server for scheduling the pay-per-view and/or subscription services, and to a modem MD for collecting the service requests from subscribers. A standard telephone-set is further connected to a twisted pair TP for the same aim. The optical cable FB reaches a signal distributor DIST from which singular multimode optical fibres depart towards respective flats. Inside each flat the incoming fibre is directed to an analog set-top box STB connected to a TV screen. In a large area there are buildings quite far to the CATV centre, this prevents the use of a multimode optical cable FB because of the excessive losses. A monomode FB cable is profitably used to transmit an FDM optical signal carrying many analog TV channels. At the other end of the FB optical cable a regeneration of the optical signal inside the distributor DIST could be preferable for many reasons. For this purpose the signal distributor DIST includes an optical receiver for each optical fibre of the optical cable FB, and as many analog optical transmitters as the departing fibres towards the set-top boxes STB on the flats. Each set-top box STB includes an analog optical receiver. Regeneration also implies optical-electrical-optical conversion. After optical-to-electrical conversion the various RF signals are amplified, if that is the case frequency translated, and routed to the various optical transmitters. VCSEL lasers and multimode optical fibres are preferred for electrical-to-optical conversion and intra-building optical distribution, due to their low cost and the small distances (lower than 150 m). Optical transmitters and receivers at the two ends of each local link are similar to the ones that will be disclosed successively.

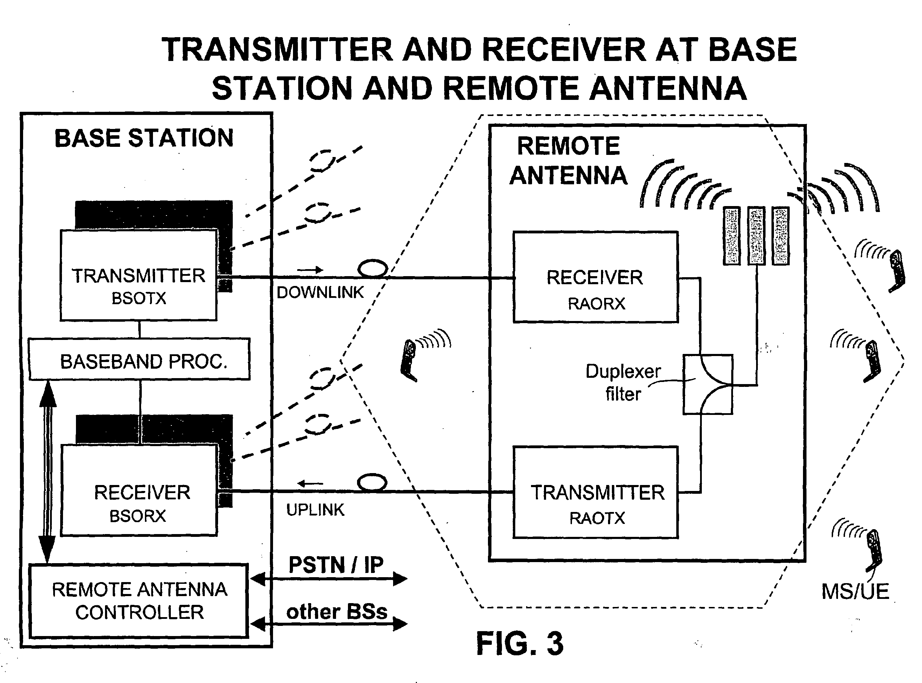

With reference to **fig.3** the Base Station BS includes the following elements: as many analog optical transmitters BSOTX as the departing multimode fibres DL towards the remote antennas, as many optical receivers BSORX as the incoming multimode fibres UL from the remote antennas, a baseband processor, and a Remote antenna controller. The baseband processor is connected to all the transmitters BSOTX and the receivers BSORX, and also to the Remote antenna controller which in this particular embodiment takes the place of the base station controller BSC of fig.1. The remote antenna includes: one optical receiver RAORX, one optical transmitter RAOTX, a duplexer filter and the external antenna. A circulator replaces duplexer filter in TDD systems.

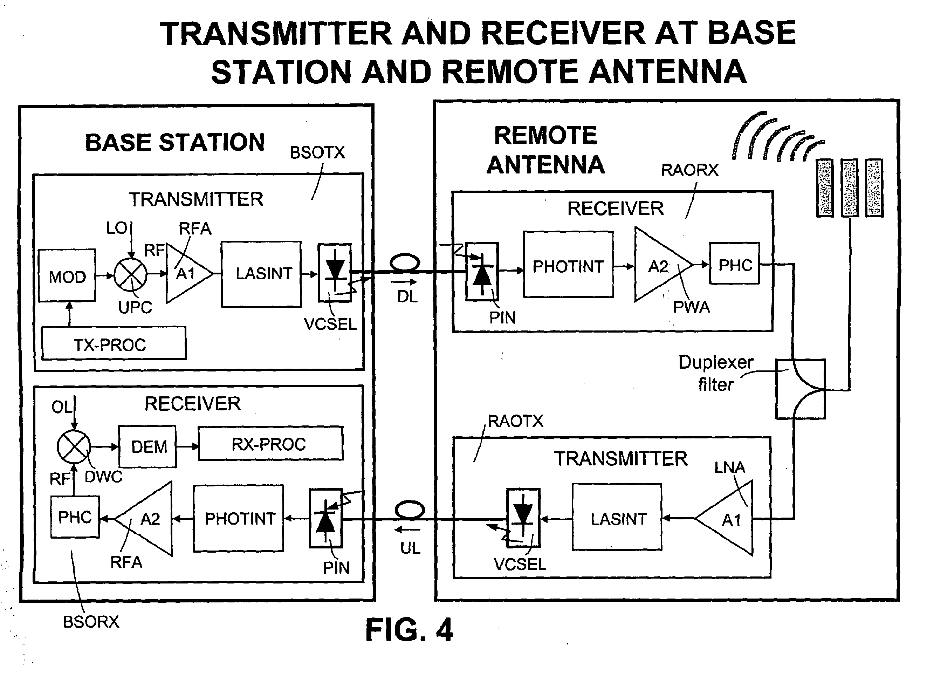

**Fig.4** shows BSOTX, BSORX, RAORX, RAOTX apparatuses with a first level of detail. The two BSOTX and RAORX blocks connected at the two ends of the multimode fibre DL include the optical link object of the present invention; the link is used to feed the transmitting antenna with the RF signal. In the opposite direction the RAOTX and BSORX blocks connected at the two ends of the multimode fibre UL include the same optical link used for transferring the uplink signal received at the antenna towards the base station BS. While the two optical links are near the same, the two transmitters BSOTX and RAOTX are different to each other, so as the two receivers RAORX and BSORX. The transmitter BSOTX includes the following cascaded elements: a baseband transmission processor TX PROC belonging to the BASEBAND PROCESSOR of fig.3, a modulator MOD, a D/A converter (not shown for brevity), a frequency up-converter UPC, a linear RF amplifier RFA, an impedance matching network LASINT, and a multimode VCSEL laser. In operation, the processor TX PROC performs typical baseband operations on the incoming routed signal in order to provide I-Q digital signals to the modulator MOD. The modulated signal is digital-to-analog and IF converted, and forwarded to the up-converter UPC which also receives a local oscillator signal LO and generates the analog RF signal in the assigned channel band. The RF signal is amplified by the RF amplifier RFA and forwarded to the impedance matching network LASINT which provides optimal interfacing with the electrical input of a multimode VCSEL laser. The latter converts the modulated RF signal directly in an optically modulated light beam feeding the multimode fibre DL.

The receiver RAORX includes the following cascaded elements: a diode PIN (photodetector), a network PHOTINT, an RF power amplifier PWA, and a phase distortion compensation network PHC. In operation, the PIN diode is optically coupled to the fibre DL for converting into electrical the modulated optical signal. The converted signal is again the modulated RF signal at the input of VCSEL, plus noise and interferences, and the intermodulation distortion generated inside the laser, plus the overall effect of the intermodal coupling along the optical fibre DL. The resulting RF signal is forwarded to the network PHOTINT which provides optimal detection and pre-amplification at the output of PIN diode. The RF signal at the output of PHOTINT is forwarded to the input of the RF power amplifier PWA. The amplified RF signal at the output of PWA is forwarded to the phase distortion compensation network PHC, which attempts to cancel the AM/PM distortion before irradiating the RF signal. Additional improvement of the optical link performances can be achieved by introducing a gain linearisation network.

The transmitter RAOTX includes the following cascaded elements: a low noise amplifier LNA, a matching network LSINT and a VCSEL laser. These blocks operate as the corresponding blocks RFA, LSINT and VCSEL included in the transmitter BSOTX.

The receiver BSORX includes the following cascaded elements: a photodetector diode PIN, a network PHOTINT, an RF power amplifier RFA, a phase distortion compensation network PHC, a downlink frequency converter DWC, an A/D converter (not shown for brevity), a demodulator DEM, and a baseband reception processor RX PROC belonging to the BASEBAND PROCESSOR of fig.3. In operation, the first four blocks operate as the equivalent blocks included in the receiver RAORX, except for lower amplification performed by RFA in respect of PWA. The mixer DWC receives both the RF and the local oscillator signal LO (LO is unique for TDD) and converts the RF signal to IF. The IF signal is down converted and demodulated, and the baseband signal is forwarded to the block RX-PROC. The latter performs typical baseband operations reciprocal to the ones performed by the block TX-PROC, obtaining a baseband digital signal to be routed towards the final destination.

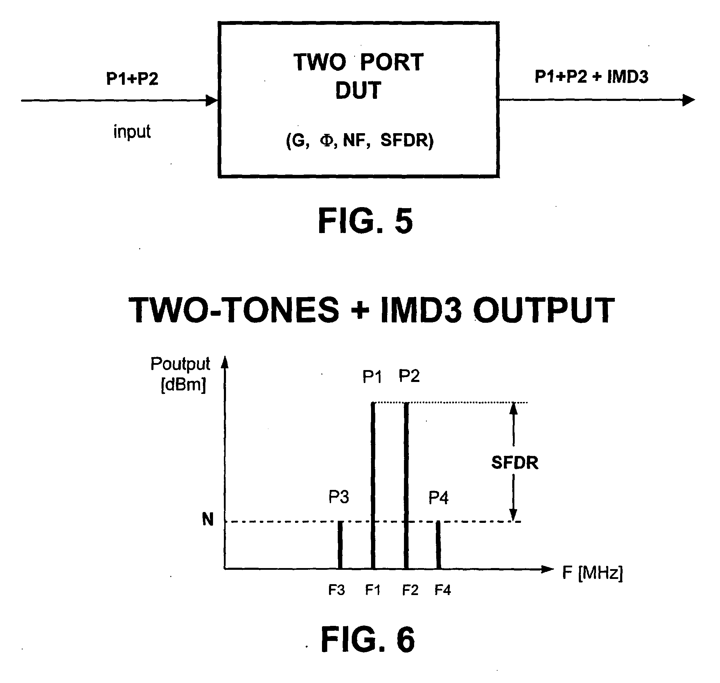

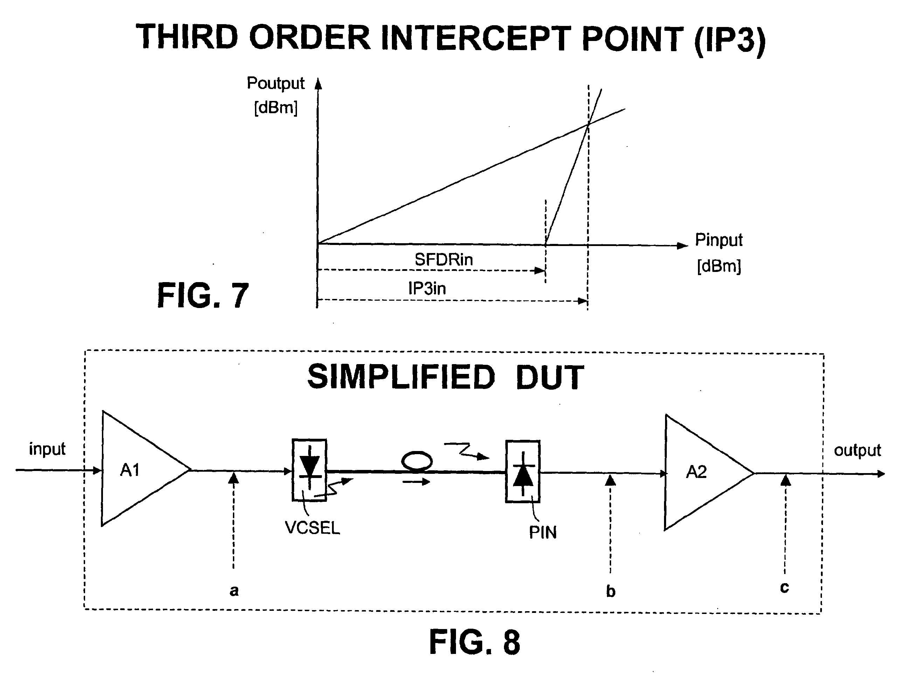

Given the substantial equivalence of the two optical links used for uplink and downlink, an uniform denomination of the amplifiers is used; precisely: RFA and LNA are named A1 while PWA and RFA are named A2. The uniform denomination allows to study the two optical links as an unique two-port DUT (Device Under Test) like the one visible in the **Figures 5** and **8.**

With reference to **fig.5** the DUT is considered as a generic two-port network affected by noise and non-linearities. At the input the thermal noise (-174 dBm/Hz at 290° K) is always present. The DUT is characterised by Gain **G** [dB], phase offset Φ[rad/degrees] between input and output signal, Noise Figure **NF** [dB], and **SFDR** [dB.Hz$^{2/3}$]. At the input of the DUT a signal $x(t)$ is present which is supposed to be narrowband around a frequency fc, so that it can be represented by means of its baseband complex envelope:

$$x(t) = A(t)\,e^{j\phi(t)} \qquad\qquad (1)$$

where $A(t)$ and $\phi(t)$ are the amplitude and the phase of signal $x(t)$, respectively. At the output of the DUT, supposed to be bandpass and memoryless, a signal $y(t)$ is present, whose baseband complex envelope is:

$$y(t) = G(A(t)) e^{j\{\phi(t) + \Phi(A(t))\}} \quad . \tag{2}$$

The two functions $G(A(t))$ and $\Phi(A(t))$ denote the overall AM/AM distortion of the gain function **G** and the overall AM/PM distortion of the phase function $\Phi$, respectively. Expression (2) shows that both gain **G** and phase $\Phi$ are depending on the amplitude $A(t)$ of the input signal $x(t)$. Especially with M-QAM modulation characterised by high-M and in presence of multicarrier modulated signals with a variable number of carriers, the amplitude $A(t)$ is subjected to high peak-versus-medium values; in these circumstances both AM/AM and AM/PM distortions might be considerable and the relevant side effects shall be counterfeited. Functions $G(A(t))$ and $\Phi(A(t))$ can be approximated by their points experimentally determined by means of a test signal $x(t)$. Once the two distortion curves have been approximated, some compensating networks are synthesised. To meet this goal, in accordance with the teaching of the invention the envelope of $y(t)$ is detected by the relevant linearisation/compensation networks used in the optical link. An alternative way to determine the AM/AM and AM/PM curves is that of developing $y(t)$ into a limited power series and equating **G** and $\Phi$ to the elements of the series. DUT of fig.5 is submitted to the classical two-tone test just for measuring the relevant 3rd order Intermodulation Distortion (IMD3). In this case the test signal $x(t)$ at the input of DUT is the summation of two sinusoidal tones of equal level and frequency F1 and F2, closely spaced to each other, whose frequency offset depends on the channel bandwidth of the effective signal.

With reference to **fig.6** at the output of the non perfectly linear DUT of fig.5 the following elements will be present:

- two signals at frequency F1 and F2, and equal level P1 = P2 in correspondence of the two tones;
- third order intermodulation products P3 and P4, of equal level, at frequency F3 = (2F1-F2) and F4 = (2F2-F1); frequencies F1 and F2 can be selected in a way that frequencies F3 and F4 fall in the channel band;
- the noise **N** [dBm/Hz] = -174 + **G** + **NF**.

The spectrum visible in fig.6 suggests that among all the spurious tones generated by a non perfectly linear device crossed by a bandpass signal, there are someone very closely spaced to the original tones which represent potential adjacent channel spurious signals. Designers shall have a measure of the grade of linearity of the used electronic devices in order to evaluate the interference spectrum, therefore relevant parameters such as SFDR and Intercept Point (usually 3rd order IP3) have been introduced. In fig.6 the **SFDR** (Spurious Free Dynamic Range) evaluated at the output of the DUT is **P** [dB] = **P1-P3** in correspondence of which P3 = **N** (noise). Being P3 a power level [dBm] while **N** is a spectral density [dBm/Hz], it be understood that **N** is measured into 1 Hz bandwidth.

The concept of Intercept Point (IP) depicted in **fig.7** was introduced some years ago and has become a useful and popular specification for comparing the quality of various non-linear electronic components. The intercept point is the theoretical level at which on a plot of output vs. input power levels, the two-tone distortion products transfer curve intersects the single tone transfer curve. Intercept is based on an extrapolation from measures at low power and assumes ideal slopes for the output tone level dependencies. The ideal slopes of the two-tone signal is three time the slope of the single tone (3 dB against 1 dB increase in a logarithmic representation). The following expression is valid for 3rd order Intercept Point (IP3in) evaluated at the input of the DUT: **IP3in** [dBm] = **P1** + **P**/2 - **G.** Let **D** [dBm] = **IP3in - NF** be the Dynamic Range Number, the following relation is true: **SFDR** = (2/3) $\times$ (174 + **D**). The two parameters **IP3in** and **SFDR** are indicated in the abscissa.

**Fig.8** shows a simplified embodiment of the DUT of fig.5 for an analog VCSEL optical link. This link includes two amplifiers A1 and A2, other than the optical VCSEL and PIN devices and the multimode optical fibre. The aim of this DUT is that to provide a reliable comparison for the performances of the invention. According to this aim the VCSEL, the multimode optical fibre, and PIN diode are the same used by the invention. The used VCSEL and PIN diode are commercial low cost devices, i.e.: Honeywhell VCSEL HFE419X-521 and Honeywhell PIN HFD3180-102. Three insertion points **a, b, c** are indicated by arrows along the link in correspondence of successive insertions of the networks LASINT, PHOTINT and PHC indicated in fig.4. Each insertion point represents a gradual improvement of the optical link obtained by the introduction of a corresponding network, in accordance with the present invention. The embodiment of fig.8 should be further simplified to consider the minimal configuration of the link; in this case the amplifier A2 is the one included in the network PHOTINT. Test tones P1 and P2 are spaced 10 MHz apart around a central frequency taken for mere convenience at 1685 MHz. In such a case it results: F1 = 1680 MHz, F2 = 1690 MHz, F3 = 1670 MHz, and F4 = 1700 MHz. The power at point **b** (fig.8) is noticeably lower than the power transmitted at point **a** because of the insertion losses of the multimode optical fibre. A fundamental parameter of the invention in subject is the maximum length of the optical fibre. This length is determined from the criterion that the signal power reaching the receiver (PIN plus A2) must exceed the receiver sensitivity. That is:

$$P_T - L(l_{max}) \geq P_R \qquad\qquad (3)$$

where:

- $P_T$ is the end-of-life transmitter power (in dBm) which can be injected into the fibre;
- $P_R$ is the worst-case receiver sensitivity (in dBm), including the side effects associated with the dispersive properties of the medium (i.e. Intersymbol Interference (ISI)), and
- $L(1)$ is the insertion loss in dB of an optical fibre of length $l$. As far as $L(1)$ is concerned, two losses are to be distinguished: a first one is the light attenuation, typically 1 dB/km, the second one is the attenuation of the RF signal which modulates the light. This second loss is considerably greater than the first although the reason is not presently well understood; in our case this loss is near 5 dB with 500 m fibre.

Expression (3) is useful to set a rough value of the nominal excitation current of VCSEL, taking in due consideration the threshold current $I_{TH}$ and the peak-to-average power ratio of the RF signal. Due to the uncertainty of the insertion loss $L(1)$ the rough value shall be experimentally corrected.

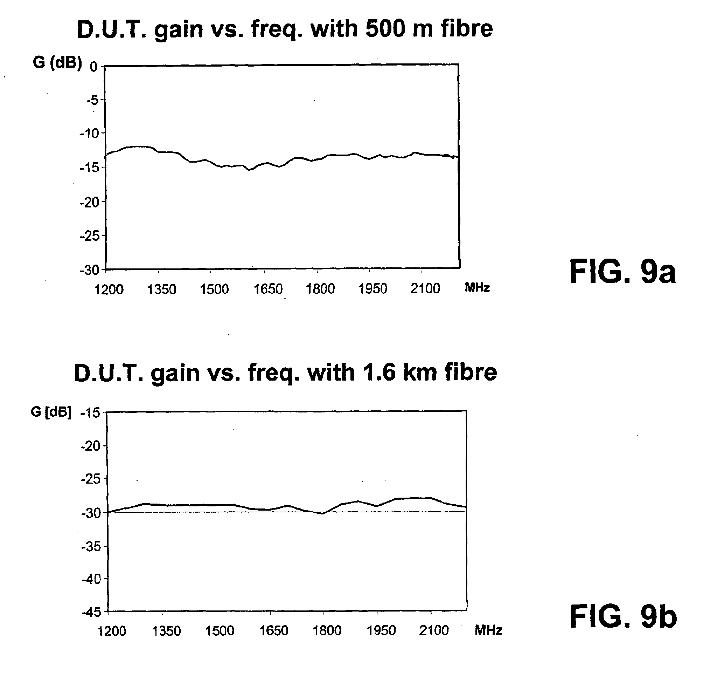

The following **Figures 9a** and **9b** show two plots of the gain **G** vs. frequency measured for the VCSEL optical link of **fig.8** with 500 m and 1.6 km optical fibres, respectively. Only a limited frequency range is reported, for brevity. The two plots show flat gain in the depicted frequency range; the flat characteristic is held well outside the visible range. The measured value of the input dynamic range **D** with **500 m** fibre is **-43.5** dBm, corresponding to an **SFDR** of **87** dB.Hz$^{2/3}$. With **1.6 km** fibre the values becomes D = **-57** dBm, corresponding to an **SFDR** of **78** dB.Hz$^{2/3}$. The central frequency of the two-tones is moved from 200 MHz to 2.5 GHz without appreciable variations of the indicated values.

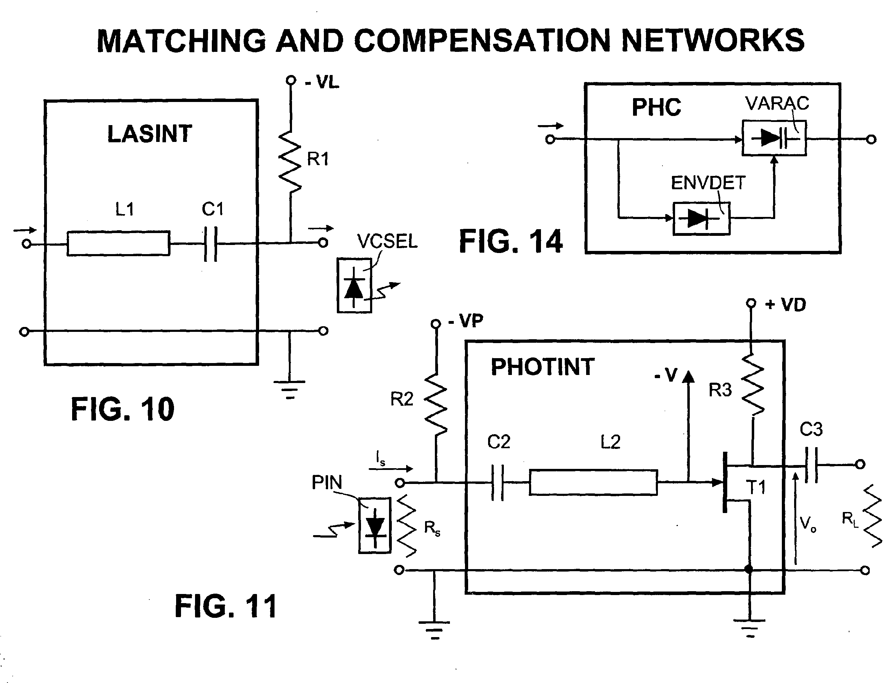

**Fig.10** shows the network LASINT of fig.4 to be inserted in the optical link at point **a** of fig.8. The network includes a discrete decoupling capacitor C1 of 2.2 pF serially connected to a transmission line L1. The two ends of the series of C1 and L1 correspond to the input and the output of the LASINT network. Externally to LASINT the VCSEL laser is serially connected to a pull-up resistance R1 towards the polarisation voltage -VL. Resistance R1 is dimensioned to drive the VCSEL optimally. Line L1 is a microstrip on FR4 dielectric substrate ($\varepsilon_r$ = 4.7) 0.3 mm thick, dimensioned to match, together with capacitor C1, the input impedance of VCSEL to the output impedance of the amplifier A1 (fig.8) and avoiding reflections. Dimensions of line L1 are the following: width w = 0.2 mm, length 1 = 12 mm. The dimensions of microstrip L1 and the value of C1 are calculated to maintain nearly constant the gain of the optical link over a band wider than the band of the RF signal. Besides, the dimensions of L1 and the value of C1 shall be modified to matching with the various allocation of the RF channel inside the overall frequency range of the VCSEL. Introducing the matching network LASINT the measured value of the input dynamic range **D** with **500 m** fibre is **-39** dBm, corresponding to an SFDR of 90 dB.Hz$^{2/3}$. With 1.6 km fibre the values becomes D = **-54** dBm, corresponding to an **SFDR** of **80** dB.Hz$^{2/3}$.

**Fig.11** shows the network PHOTINT of fig.4 to be inserted in the optical link at point **b** of fig.8. This network includes a decoupling capacitor C2 of 2.2 pF serially connected to a transmission line L2, in turn connected to the gate of a low-noise FET T1, for example Mitsubishi MGF1908B with flat gain over than 15 GHz. The series of C2 and L2 constitutes an impedance matching network of the FET T1 input impedance to the PIN diode output impedance. A resistance R3 connects the drain of T1 to the polarisation voltage +VD, while the source is grounded. The gate of T1 is negatively polarised by -V. Externally to PHOTINT the anode of PIN diode is pulled-up to the inverse polarisation voltage -VP by means of a resistance R2, serially connected to the PIN diode at the input of the network connected with the capacitor C2. Resistance R2 is dimensioned to set the inverse current of the PIN diode. An external capacitor C3 couples the signal at the output of T1 to the input of the amplifier A2 (fig.8). Transmission line L2 is a microstrip on a FR4 substrate 0.3 mm thick ($\varepsilon_r$ = 4.7) dimensioned to match, together with capacitor C2, the input impedance of FET T1 to the output impedance of the PIN diode for avoiding signal reflections and minimising the Noise Figure of FET T1 in the meanwhile. Due to this constraint the gain **G** is not more flat as in fig. 9a but weakly selective around the midband frequency (1.685 GHz). The microstrip L2 is 0.2 mm wide and 16 mm long, corresponding to 15 nH inductance at 1.685 GHz. Dimensions of L2 microstrip and the value of C2 match the various allocation of the RF channel inside the overall frequency range of laser VCSEL. The Low-noise FET T1 operates as a transimpedance amplifier in common source configuration which ideally supplies an output voltage $V_o$ in proportion to the signal current $I_s$ through the PIN diode, independently of the source resistance $R_s$ and the external load resistance $R_L$. The source resistance $R_s$ is the resistance of the PIN diode in a Norton's equivalent of the input circuit of FET T1, while the external load resistance $R_L$ is the input resistance of the RF amplifier A2 (fig.8) in a Thevenin's equivalent of the output circuit of FET T1. Considered the importance the Noise Figure assumes in the design of the network PHOTINT, some useful notions on this argument are given in the following. A sound definition of the Noise Figure $n_F$ can be done in terms of Signal-to-Noise ratio (S/N) degradation produced by a 2-port network (the network PHOTINT). To say, the ratio of the available S/N power-ratio at the input of the 2-port network to the available S/N power-ratio at the output, when the temperature of the input noise source is 290° K. This is expressed as:

$$n_F = \frac{p_{si}/p_{ni}}{p_{so}/p_{no}} \simeq \frac{p_{si}/kT_o\,df}{p_{so}/p_{no}} \qquad (4)$$

where:

$p_{si}$ = the available signal power at the input;
$p_{so}$ = the available signal power at the output;
$p_{ni}$ = the available noise power at the input in a small band $df$ (1 Hz). Since the temperature is standard: $p_{ni} = kT_o\,df$, where $k$ is the Boltzmann's constant ($1.3805 \times 10^{-23}$ joule/K);
$p_{no}$ = the available noise power at the output in a small band $df$ (1 Hz).

Using the definition $g_a(f) = p_{so}/p_{si}$, where $g_a(f)$ is the available gain of the 2-port network with the driving-source noise voltage and the internal noise uncorrelated, the expression (4) is equivalent to:

$$n_F = \frac{p_{no}}{g(f)\,kT_o\,df} \qquad (5)$$

The average noise figure is:

$$\overline{n}_F = \frac{p_{nt}}{g_o\,kT_o\,B_w} \qquad (6)$$

where $p_{nt}$ is the total available noise power at the output, $g_o$ is the available midband gain, and $B_w$ is the noise bandwidth including the RF channel band. The smaller the Noise Figure, the better is the sensitivity of the network to discriminate very low input signals from noise. Expression (6) shows that the noise figure could be effectively minimised by introducing some restrictions on the bandwidth $B_w$ and the gain $g_o$. The pure reactive impedance matching network L2, C2 at the input of PHOTINT doesn't introduce noise terms into the (5) and (6), thus is suitable for minimising the noise figure $n_F$. Joined $n_F$ minimisation and impedance matching can be performed either experimentally or by using known mathematical algorithms. Once minimisation is complete both the $n_F$ and the impedance function $Z_2(f, L2, C2)$ is known. In such a case $Z_2(f, L2, C2)$ can be synthesised with known methods giving the above indicated values of $L2$ and $C2$.

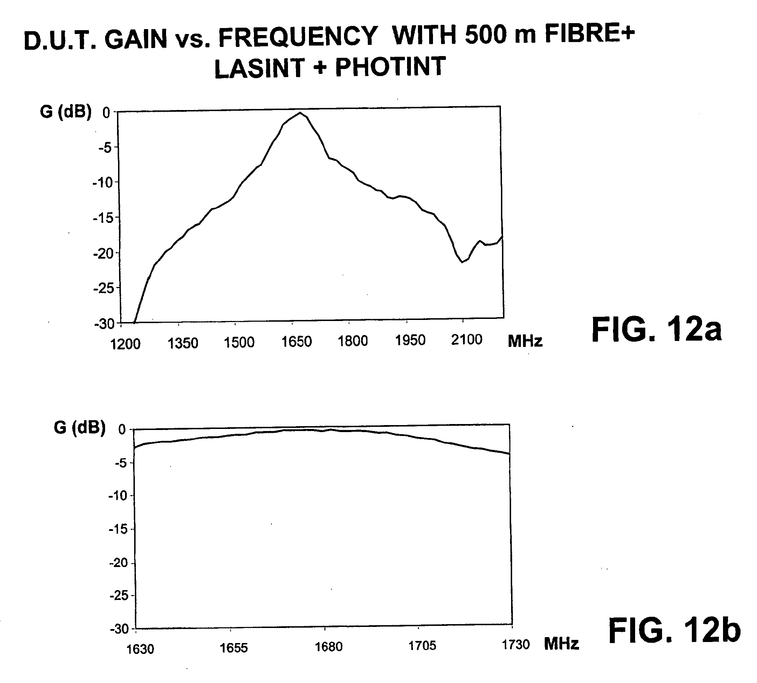

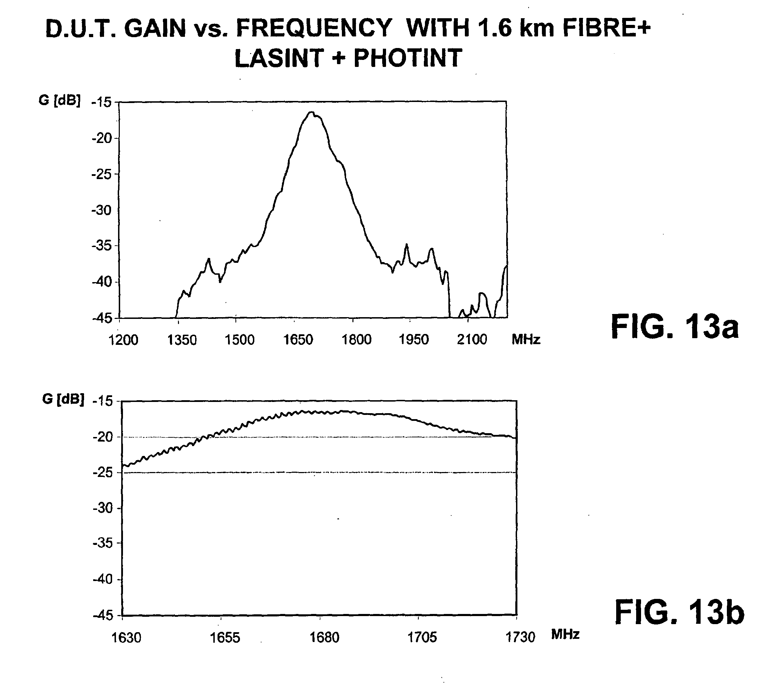

The successive Figures **12a, 12b** and **13a, 13b** show as many plots of the gain vs. frequency of the DUT of fig.8 upgraded with the two networks LASINT and PHOTINT for two fibre lengths. It can be appreciated that gain versus frequency is similar to a slowly decreasing bandpass function much wider than the 8 MHz channel spacing of CATV.

**Fig.12a** shows the gain vs. frequency measured on 500 m optical link, while **fig.12b** shows the enlarged central part of the preceding plot in a band of about 100 MHz. It can be appreciate that the gain is nearly flat inside the 5 MHz channel band. The measured value of the input dynamic range **D** with a **500 m** fibre is **-33** dBm, corresponding to an **SFDR** of **94** dB.Hz$^{2/3}$.

**Fig.13a** shows the gain vs. frequency measured on **1.6 km** optical link, while **fig.13b** shows the enlarged central part of the preceding plot in a band of about 100 MHz. It can be appreciate that the gain is nearly flat inside the 5 MHz channel band. The measured value of the input dynamic range **D** with **1.6 km** fibre is **-49.5** dBm, corresponding to an **SFDR** of 83 dB.Hz$^{2/3}$.

**Fig.14** schematises the network PHC of fig.4 to be inserted in the optical link at point **c** of fig.8. This network includes an envelope detector ENVDET and a variable phase shifter VARAC. The envelope detector ENVDET includes a half-wave rectifier reproducing the envelope of the modulated RF signal present at the output of the power amplifier A2 (fig.8). The rectified voltage is used as a control signal of the variable phase shifter VARAC. In a non-limiting embodiment a varactor diode (inversely polarised) is used as a voltage-controlled phase shifter. For a certain extent of the control signal level the inverse capacity of the varactor is a linear function of the control signal, so as the phase offset introduced into the RF output signal. The sign of phase shift introduced by the network PHC being opposite to the AM/PM phase distortion in correspondence of the revealed envelope, this takes care of all the AM/PM distortions along the optical link.

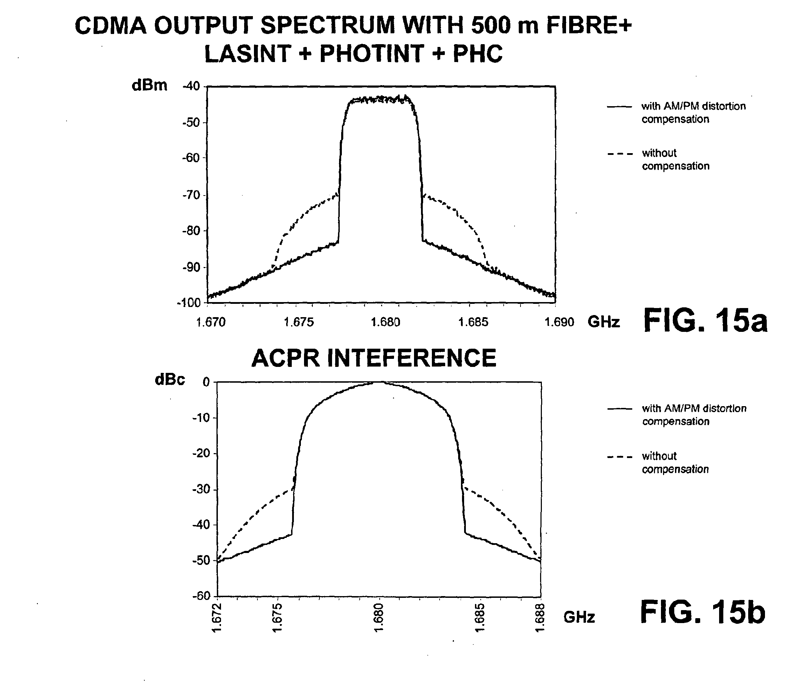

**Fig.15a** shows (solid line) the frequency spectrum of a WCDMA signal (translated at 1.680 GHz for convenience) at the end of 500 m optical link of fig.8 completed with LASINT, PHOTINT, and PHC networks. The measured value of the input dynamic range **D** with a **500 m** fibre is **-27** dBm, corresponding to an **SFDR** of **98** dB.Hz$^{2/3}$. On the same Figure the spectrum without compensation of the phase distortion (dashed line) is superimposed to the preceding spectrum for comparison. It can be appreciate the lowering of the out of band interferences achieved by the phase distortion compensation network PHC. The interference power inside adjacent channels is reduced consequently. **Fig.15b** is similar to fig.15a but is referred to the comparison of the canonical ACPR (Adjacent Channel Power Ratio) measure performed on the RRC filter bandwidth (5 MHz).

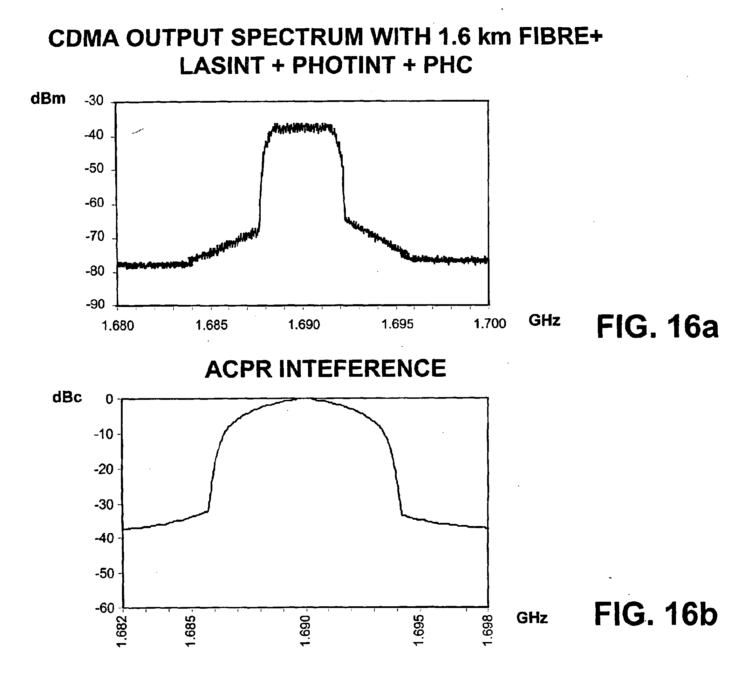

**Figures 16a** and **16b** are similar to the Figures 15a and 15b but with **1.6 km** fibre. The measured value of the input dynamic range **D** with **1.6 km** fibre is **-45** dBm, corresponding to an **SFDR** of **86** dB.Hz$^{2/3}$.

Additional increasing of the **SFDR** is possible by the introduction of one or two gain linearisation networks in appropriate points of the optical links. A suitable lineariser is the one disclosed in the European patent EP 0451909-B1 (corresponding to US 5,138,275) titled: "Predistortion lineariser for microwave power amplifiers", inventors Carlo Buoli et al., in the name of the same Assignee (SIEMENS) of the present invention, and incorporated by reference. An independent claim (US) recites: A final microwave power amplifier having compensation for gain compression and phase distortion thereof, comprising:

- a transistor amplifier;
- subpolarisation biasing means connected to an input of said transistor amplifier for providing gain expansion with increase in power of the signal at the input of the transistor amplifier by setting a subpolarisation operating point thereof; and
- phase shifter means controlled by a continuous component of voltage present at an output of said amplifier transistor for introducing a phase distortion for offsetting the phase distortion of said final power amplifier.

This known solution is highly profitable because makes use of a unique common source GaAsFET transistor polarised near pinch-off to act both as a final RF power amplifier with gain expansion for recovering amplitude distortion and command signal generator for a varactor used for offsetting the phase distortion of the power amplifier. A solution with the lineariser (both FET and varactor) placed upstream a separate power amplifier is also claimed in the mentioned patent. The peculiarity of this "predistortion lineariser" is that the two type of distortions AM/AM and AM/PM are compensated together, so that a disjoint variable phase shifter equivalent to the PHC network (fig.14) is not achievable, and the sole compensation of the AM/PM distortion impossible. The contrary is not completely true and the sole AM/AM distortion can be compensated by omitting the varactor circuitry. There are not indications in the disclosure of the cited patent about a possible use of the "predistortion lineariser" to build-up an analog optical link. This known lineariser appositely thought for a microwave power amplifier is now forced to further compensate for the AM/PM distortion due to the intermodal dispersion inside the optical fibre. With reference to fig.8 the following are possible use of the known "predistortion lineariser":

- a first simplest and low cost embodiment, particularly indicated for low amplifications and short fibre lengths, is that to use the predistortion lineariser in place of FET T1 (fig.11) and do not use the amplifier A2.
- A second embodiment, coinciding with the second variant, of the invention is that to use the predistortion lineariser in place of the amplifier A2 and the compensating network PHC.
- A third embodiment, coinciding with the third variant, is that to replace the amplifier A1 with the said lineariser deprived of the varactor.

**Claims**

**1.** Analog optical link including the following elements:

  - a first RF amplifier (A1) of an analog bandpass RF signal;
  - a first impedance matching network (LASINT) to match the input impedance of a downstream VCSEL laser to the output impedance of the first RF amplifier (A1);
  - said VCSEL laser coupled to one end of a multimode optical fibre of given length for transducing the electrical bandpass RF signal into an optical signal injected into the multimode fibre;
  - a PIN diode coupled to the other end of the multimode optical fibre for transducing into electrical the optical signal coming from the fibre;
  - a second RF amplifier (T1) of transimpedance type;

**characterised in that** said analog optical link includes:

- a second impedance matching network (C2, L2) adapted to match the input impedance of the transimpedance amplifier (T1) to the output impedance of the PIN diode, minimising in the meanwhile the noise figure of said transimpedance amplifier (T1) upon a frequency range including the bandpass of the RF signal;
- an amplitude envelope detector (ENVDET) placed downstream the transimpedance amplifier (T1) for generating an envelope control signal;
- a variable phase shifter (VARAC) controlled by said envelope control signal to introduce a phase offset on the RF signal at the output of the transimpedance amplifier (T1) compensating for the AM/PM distortion introduced by the optical fibre.

2. Analog optical link of the claim1, **characterised in that** includes a third RF amplifier (A2) placed between said transimpedance amplifier (T1) and said variable phase shifter (VARAC).

3. Analog optical link of the claim 2, **characterised in that** the third RF amplifier (A2) is a final power amplifier supplying a transmitting antenna and the link includes a gain linearisation network of said third RF power amplifier to compensate for the AM/AM distortion introduced on the power peaks of the RF signal.

4. Analog optical link of the claim 3, **characterised in that** the third RF amplifier (A2) includes subpolarisation means of a power transistor constituting a gain expansion stadium operating as predistortion lineariser further generating said envelope control signal for said variable phase shifter (VARAC).

5. Analog optical link of one of the preceding claims, **characterised in that** includes a gain linearisation network designed to compensate for the AM/AM distortion of the first RF power amplifier (A1) on the power peaks of the RF signal in combination with the highest amplifications needed to drive the VCSEL adequately for the longest optical links.

6. Analog optical link of one of the preceding claims, **characterised in that** the multimode optical fibre is up to 150 m long to match up to typical lengths of the intra-building connections involved in CATV service, or to connect indoor apparatuses with a tower antenna, in particular an antenna array suitable for beamforming.

7. Analog optical link of one of the preceding claims except the preceding, **characterised in that** the multimode optical fibre is up to 500 m long to match up to a small-size fibre infrastructure suitable for connecting a centralised base station of a pico/microcellular system to a pool of remote antennas serving as many cells.

8. Analog optical link of one of the preceding claims except the preceding one, **characterised in that** the multimode optical fibre is up to 1.6 km long to match up to a fibre infrastructure suitable for connecting a centralised base station of a cellular system either of the second or third generation to a pool of remote antennas.

9. Analog optical link of one of the preceding claims, **characterised in that** said first impedance matching network (LASINT) includes a discrete capacitor (C1) serially connected to a microstrip (L1), being the value of said capacitor (C1) and the dimensions of said microstrip (L1) calculated to maintain nearly constant the gain of the optical link over a band wider than the band of the RF signal.

10. Analog optical link of one of the preceding claims, **characterised in that** said second impedance matching network (C2, L2) includes a discrete capacitor (C2) serially connected to a microstrip (L2).

**Patentansprüche**

1. Analoge optische Verbindung mit folgenden Elementen:

- einem ersten HF-Verstärker (A1) eines analogen Bandpaß-HF-Signals;
- einem ersten Impedanzanpassungsnetzwerk (LASINT) zum Anpassen der Eingangsimpedanz eines stromabwärtigen VCSEL-Lasers an die Ausgangsimpedanz des ersten HF-Verstärkers (A1);
- wobei dieser VCSEL-Laser an ein Ende einer Multimodenlichtleitfaser gegebener Länge zum Umwandeln des elektrischen Bandpaß-HF-Signals in ein in die Multimodenfaser eingekoppeltes optisches Signal angekoppelt ist;

- einer an das andere Ende der Multimodenlichtleitfaser angekoppelten PIN-Diode zum Umwandeln des aus der Faser kommenden optischen Signals in ein elektrisches Signal;
- einem zweiten HF-Verstärker (T1) der Transimpedanzart;

**dadurch gekennzeichnet, daß** die analoge optische Verbindung folgendes umfaßt:

- ein zweites Impedanzanpassungsnetzwerk (C2, L2) zum Anpassen der Eingangsimpedanz des Transimpedanzverstärkers (T1) an die Ausgangsimpedanz der PIN-Diode, zwischenzeitlich Minimieren der Rauschzahl des Transimpedanzverstärkers (T1) bei einem Frequenzbereich einschließlich des Bandpasses des HF-Signals;
- einen stromabwärts des Transimpedanzverstärkers (T1) plazierten Amplitudenhüllkurvendetektor (ENVDET) zum Erzeugen eines Hüllkurvensteuersignals;
- einen durch das Hüllkurvensteuersignal gesteuerten variablen Phasenverschieber (VARAC) zum Einführen eines Phasenversatzes an dem HF-Signal am Ausgang des Transimpedanzverstärkers (T1), der die durch die Lichtleitfaser eingeführte AM/PM-Verzerrung kompensiert.

2. Analoge optische Verbindung nach Anspruch 1, **dadurch gekennzeichnet, daß** sie einen zwischen den Transimpedanzverstärker (T1) und den variablen Phasenverschieber (VARAC) plazierten dritten HF-Verstärker (A2) umfaßt.

3. Analoge optische Verbindung nach Anspruch 2, **dadurch gekennzeichnet, daß** der dritte HF-Verstärker (A2) ein eine Sendeantenne versorgender Endleistungsverstärker ist und die Verbindung ein Verstärkungslinearisierungsnetzwerk des dritten HF-Leistungsverstärkers zum Kompensieren der an den Leistungsspitzen des HF-Signals eingeführten AM/AM-Verzerrung umfaßt.

4. Analoge optische Verbindung nach Anspruch 3, **dadurch gekennzeichnet, daß** der dritte HF-Verstärker (AZ) Subpolarisierungsmittel eines Leistungstransistors umfaßt, der eine Verstärkungserweiterungsstufe darstellt, die als Vorverzerrungslinearisierer wirkt, und weiterhin das Hüllkurvensteuersignal für den variablen Phasenverschieber (VARAC) erzeugt.

5. Analoge optische Verbindung nach einem der vorhergehenden Ansprüche, **dadurch gekennzeichnet, daß** sie ein Verstärkungslinearisierungsnetzwerk zum Kompensieren der AM/AM-Verzerrung des ersten HF-Leistungsverstärkers (A1) an den Leistungsspitzen des HF-Signals in Verbindung mit den höchsten Verstärkungen umfaßt, die zum ausreichenden Ansteuern des VCSEL für die längsten optischen Verbindungen benötigt werden.

6. Analoge optische Verbindung nach einem der vorhergehenden Ansprüche, **dadurch gekennzeichnet, daß** die Multimodenlichtleitfaser bis zu 150 m lang ist, um den typischen Längen der am CATV-Dienst beteiligten gebäudeinternen Verbindungen zu entsprechen oder um Innenvorrichtungen mit einer Turmantenne, insbesondere einer zur Richtstrahlbildung geeigneten Antennengruppe, zu verbinden.

7. Analoge optische Verbindung nach einem der vorhergehenden Ansprüche außer dem vorhergehenden, **dadurch gekennzeichnet, daß** die Multimodenlichtleitfaser bis zu 500 m lang ist, um einer Faserinfrastruktur kleiner Größe zu entsprechen, die zum Verbinden einer zentralen Basisstation eines Pico- /Mikrozellularsystems mit einer Gruppe von entfernten Antennen geeignet ist, die die gleiche Anzahl von Zellen versorgen.

8. Analoge optische Verbindung nach einem der vorhergehenden Ansprüche außer dem vorhergehenden, **dadurch gekennzeichnet, daß** die Multimodenlichtleitfaser bis zu 1,6 km lang ist, um einer Faserinfrastruktur zu entsprechen, die zum Verbinden einer zentralen Basisstation eines Zellularsystems entweder der zweiten oder dritten Generation mit einer Gruppe von entfernten Antennen geeignet ist.

9. Analoge optische Verbindung nach einem der vorhergehenden Ansprüche, **dadurch gekennzeichnet, daß** das erste Impedanzanpassungsnetzwerk (LASINT) einen seriell mit einem Mikrostreifen (L1) verbundenen diskreten Kondensator (C1) umfaßt, wobei der Wert des Kondensators (C1) und die Abmessungen des Mikrostreifens (L1) dafür berechnet sind, um die Verstärkung der optischen Verbindung über ein breiteres Band als das Band des HF-Signals annähernd konstant zu halten.

10. Analoge optische Verbindung nach einem der vorhergehenden Ansprüche, **dadurch gekennzeichnet, daß** das zweite Impedanzanpassungsnetzwerk (C2, L2) einen seriell mit einem Mikrostreifen (L2) verbundenen diskreten Kondensator (C2) enthält.

**Revendications**

1.  Liaison optique analogique incluant les éléments suivants :

    - un premier amplificateur RF (A1) d'un signal RF passe-bande analogique ;
    - un premier réseau d'adaptation d'impédance (LASINT) pour adapter l'impédance d'entrée d'un laser VCSEL aval à l'impédance de sortie du premier amplificateur RF (A1) ;
    - ledit laser VCSEL couplé à une extrémité d'une fibre optique multimodale de longueur donnée pour la transduction du signal RF passe-bande électrique en un signal optique injecté dans la fibre multimodale ;
    - une diode PIN couplée à l'autre extrémité de la fibre optique multimodale pour la transduction électrique du signal optique provenant de la fibre ;
    - un deuxième amplificateur RF (T1) du type de transimpédance ;

    **caractérisée en ce que** ladite liaison optique analogique inclut :

    - un deuxième réseau d'adaptation d'impédance (C2, L2) approprié pour adapter l'impédance d'entrée de l'amplificateur de transimpédance (T1) à l'impédance de sortie de la diode PIN, minimisant en même temps le chiffre de bruit dudit amplificateur de transimpédance (T1) sur une plage de fréquences incluant la bande passante du signal RF ;
    - un détecteur d'enveloppe d'amplitude (ENVDET) placé en aval de l'amplificateur de transimpédance (T1) pour générer un signal de commande d'enveloppe ;
    - un déphaseur variable (VARAC) commandé par ledit signal de commande d'enveloppe pour introduire un décalage de phase sur le signal RF à la sortie de l'amplificateur de transimpédance (T1) compensant la distorsion AM/PM introduite par la fibre optique.

2.  Liaison optique analogique selon la revendication 1, **caractérisée en ce qu'**elle inclut un troisième amplificateur RF (A2) placé entre ledit amplificateur de transimpédance (T1) et ledit déphaseur variable (VARAC).

3.  Liaison optique analogique selon la revendication 2, **caractérisée en ce que** le troisième amplificateur RF (A2) est un amplificateur de puissance final alimentant une antenne de transmission et la liaison inclut un réseau de linéarisation de gain dudit troisième amplificateur de puissance RF pour compenser la distorsion AM/AM introduites sur les pics de puissance du signal RF.

4.  Liaison optique analogique selon la revendication 3, **caractérisée en ce que** le troisième amplificateur RF (A2) inclut un moyen de sub-polarisation d'un transistor de puissance constituant un stade d'expansion de gain fonctionnant comme un linéariseur de pré-distorsion générant en outre ledit signal de commande d'enveloppe pour ledit déphaseur variable (VARAC).

5.  Liaison optique analogique selon l'une quelconque des revendications précédentes, **caractérisée en ce qu'**elle inclut un réseau de linéarisation de gain conçu pour compenser la distorsion AM/AM du premier amplificateur de puissance RF (A1) sur les pics de puissance du signal RF en combinaison avec les amplifications les plus élevées nécessaires pour entraîner le VCSEL de façon adéquate pour les liaisons optiques les plus longues.

6.  Liaison optique analogique selon l'une quelconque des revendications précédentes, **caractérisée en ce que** la fibre optique multimodale a une longueur de jusqu'à 150 m pour s'adapter aux longueurs types des connexions intra-bâtiments impliquées dans le service de télévision par câble, ou pour connecter des appareils intérieurs avec une antenne de tour, en particulier un réseau d'antennes approprié à la formation de faisceaux.

7.  Liaison optique analogique selon l'une quelconque des revendications précédentes à l'exception de la précédente, **caractérisée en ce que** la fibre optique multimodale a une longueur de jusqu'à 500 m pour s'adapter à une infrastructure fibre de petite taille appropriée pour connecter une station de base centralisée d'un système pico/microcellulaire à un pool d'antennes à distance desservant autant de cellules.

8.  Liaison optique analogique selon l'une quelconque des revendications précédentes à l'exception de la précédente, **caractérisée en ce que** la fibre optique multimodale a une longueur de jusqu'à 1,6 km pour s'adapter à une infrastructure fibre appropriée pour connecter une station de base centralisée d'un système cellulaire de deuxième ou de troisième génération à un pool d'antennes à distance.

9.  Liaison optique analogique selon l'une quelconque des revendications précédentes, **caractérisée en ce que** ledit premier réseau d'adaptation d'impédance (LASINT) inclut un condensateur discret (C1) connecté en série à un microruban (L1), la valeur dudit condensateur (C1) et les dimensions dudit microruban (L1) étant calculées de manière à maintenir presque constant le gain de la liaison optique sur une bande plus large que la bande du signal RF.

10. Liaison optique analogique selon l'une quelconque des revendications précédentes, **caractérisée en ce que** ledit deuxième réseau d'adaptation d'impédance (C2, L2) inclut un condensateur discret (C2) connecté en série à un microruban (L2).

# CELLULAR SYSTEM WITH CENTRALISED BASE STATIONS

FIG. 1

EP 1 443 687 B1

FIG. 2

# TRANSMITTER AND RECEIVER AT BASE STATION AND REMOTE ANTENNA

**BASE STATION**

TRANSMITTER
BSOTX

DOWNLINK

BASEBAND PROC.

RECEIVER
BSORX

UPLINK

REMOTE ANTENNA
CONTROLLER

PSTN / IP

other BSs

**REMOTE ANTENNA**

RECEIVER
RAORX

Duplexer filter

TRANSMITTER
RAOTX

MS/UE

**FIG. 3**

EP 1 443 687 B1

# TRANSMITTER AND RECEIVER AT BASE STATION AND REMOTE ANTENNA

FIG. 4

EP 1 443 687 B1

**FIG. 5**

## TWO-TONES + IMD3 OUTPUT

**FIG. 6**

EP 1 443 687 B1

# THIRD ORDER INTERCEPT POINT (IP3)

## FIG. 7

EP 1 443 687 B1

SIMPLIFIED DUT

## FIG. 8

## D.U.T. gain vs. freq. with 500 m fibre

FIG. 9a

## D.U.T. gain vs. freq. with 1.6 km fibre

FIG. 9b

EP 1 443 687 B1

# MATCHING AND COMPENSATION NETWORKS

FIG. 10

FIG. 11

FIG. 14

EP 1 443 687 B1

# D.U.T. GAIN vs. FREQUENCY WITH 500 m FIBRE+ LASINT + PHOTINT

**FIG. 12a**

**FIG. 12b**

EP 1 443 687 B1

## D.U.T. GAIN vs. FREQUENCY WITH 1.6 km FIBRE+ LASINT + PHOTINT

FIG. 13a

FIG. 13b

EP 1 443 687 B1

## CDMA OUTPUT SPECTRUM WITH 500 m FIBRE+ LASINT + PHOTINT + PHC

with AM/PM distortion compensation

- - - without compensation

**FIG. 15a**

## ACPR INTEFERENCE

with AM/PM distortion compensation

- - - without compensation

**FIG. 15b**

EP 1 443 687 B1

## CDMA OUTPUT SPECTRUM WITH 1.6 km FIBRE+ LASINT + PHOTINT + PHC

FIG. 16a

## ACPR INTEFERENCE

FIG. 16b

EP 1 443 687 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0451909 B1

- US 5138275 A

### Non-patent literature cited in the description

- **J.C. FAN ; C.L. LU ; L.G. KAZOVSKY.** *IEEE TRANSACTIONS ON MICROWAVE THEORY AND TECHNIQUES,* August 1997, vol. 45 (8
- Multimode VCSEL links for RF Communication. **HARRY LEE ; RAJEEV J. RAM.** Sponsor U.S. Navy - Office of Naval Research. RLE Progress Report Number 141, 160-161

- **INGHAM J.D. et al.** *1-25 Gb s-1 bidirectional multimode-fibre data link using a dual-purpose vertical-cavity laser & detector,* 30 September 2001, 462-463